# EUROPEAN PATENT SPECIFICATION

(11) **EP 1 998 062 B1**
(45) Date of publication and mention of the grant of the patent: **09.11.2011**
(21) Application number: 08156304.1
(22) Date of filing: 15.05.2008
(51) Int. Cl.: F16D 25/0638, F16D 25/12

(54) **Powershift transmission clutch system and retractor system for such**
Kupplungssystem eines Lastschaltgetriebes und Einzugssystem dafür
Système d'embrayage de boîte de vitesses et système rétracteur correspondant

(30) Priority: 29.05.2007 US 754457
(43) Date of publication of application: 03.12.2008
(73) Proprietor: Deere & Company, Moline, IL 61265-8098 (US)
(72) Inventor: Vu, Thomas H, Cedar Falls, IA 50613 (US); Eike, Craig R, Coffeyville, KS 67337 (US); Gray, Joe R, Coffeyville, KS 67337 (US)
(74) Representative: Holst, Sönke

(56) References cited:
- EP-A- 0 950 827
- GB-A- 2 370 621
- JP-A- 57 204 327
- US-A- 5 064 040
- US-A- 5 749 451

## Description

The present invention relates generally to a powershift transmission clutch system for a hydraulically operated clutch having an energized and a de-energized position comprising: a clutch housing having a piston cavity; a hydraulic clutch piston disposed within the piston cavity and sliding axially within the piston cavity to engage a series of clutch separator and friction plates coaxially disposed within the piston cavity; a pressurized hydraulic fluid providing a force within the piston cavity that pushes the hydraulic clutch piston axially; a clutch drum splined to the clutch housing and having a cylindrical body and splined teeth for engaging the series of clutch separator and friction plates; a clutch hub surface coaxially disposed within the clutch drum and having the cylindrical body and splined teeth for engaging the series of separator and friction plates; a clutch plate pack operatively interposed between the clutch drum and the clutch hub surface and engaging the series of clutch separator and friction plates; a retainer held within the clutch housing. Such a clutch system is known from document US 5,064,040. Furthermore the invention relates to a piston retractor system for such a powershift transmission system.

Powershift transmission clutches are commonly used in a variety of work vehicles. Powershift transmission clutches generally include a clutch drum (driving or driven member) having an expandable piston operating fluid chamber or piston cavity, a piston axially slidably positioned against the piston-operating piston cavity, a clutch hub (driven member) coaxially disposed in the clutch drum, and a clutch plate pack interposed between the clutch drum and the clutch hub having one end directed to the piston. The clutch plate pack includes first and second groups of plates which are alternately juxtaposed. When the piston cavity is fed with pressurized operating fluid, the piston is forced to press the clutch plate pack thereby to engage the first and second groups of clutch plates and the corresponding clutch drum and hub.

To shift from one forward gear speed ratio to another gear speed ratio, one or more clutches associated with the current speed ratio is disengaged or released (off-going), substantially simultaneously with the engagement of one or more additional and different clutches (on-coming) by introducing fluid into the clutches (also known as clutch fill time) being engaged at the same time fluid is depressurized from the clutches being disengaged. Under this engaged condition, the clutch drum and the clutch hub are united and thus can rotate together. When the pressurized operating fluid is depressurized from the piston cavity, the piston is pushed back, which releases the clutch plate pack thereby to cancel the engagement between the first and second groups of clutch plates.

Under this disengaged condition, the clutch drum and the clutch hub can rotate separately or individually. The amount of time it takes to move the clutch from the disengaged to the engaged position is programmed into the control logic to optimize the shift quality that a vehicle will have. The optimum situation is to begin engaging the oncoming clutch(es) while the off-going clutch(es) are disengaged. Thus, as torque applied by the off-going clutch(es) decreases, torque applied by the oncoming clutch(es) increases. This overlap of torques minimizes the sudden pressure or spike in the clutch(es) and provides a smoother transition between gears. The difficulty however, lies in the vehicle's ability to properly overlap the torques due to inherent and changeable time delays during clutch engagement and disengagement.

One danger of the shifting process is that of wear or damage to the gears and clutch plates. As one set of clutch plates are disengaged while another set is engaged, slippage tends to occur and the plates become worn. Specifically, if the two are both engaged simultaneously, this can cause serious damage to the transmission as gear teeth break, or extreme wear as the clutches are forced to slip excessively with respect to each other. Alternatively, if neither of the gears break or the clutches slip, simultaneous engagement in two gear ratios can bring the vehicle to a sudden and precipitous stop.

For this reason, the timing and synchronizing of clutch engagement and disengagement is of critical importance when shifting. To accurately coordinate the engagement and disengagement of the clutches, it is necessary to determine the amount of time it takes for the clutches to engage or disengage. One known method is to perform the coordination by a control valve software recalibration process. This recalibration process, which is performed periodically as required, enables the control software to adjust the timing based on changed clutch fill time due to the wear of the clutch plates, which increases the piston travel time to engagement.

Generally, over a period of time, as the thickness of the clutch plates decrease or plates begin to wear, the running clearance tends to increase. Running clearance also known as the disengaging travel distance is essentially the gap between the clutch plates when the system is de-energized. Some running clearance between clutch plates during its de-energized phase is desired to minimize: 1) the rubbing of clutch plates, 2) brake disk wear, and 3) heat generation and inefficiency due to disk drag. In addition, insufficient running clearance increases windage loss mainly due to hydraulic fluid escaping through small gaps between the clutch plates.

Alternatively, too much running clearance is not desirable for the following reasons: 1) delayed time for hydraulic clutch piston to travel for full clutch engagement, thus affecting transmission shift quality; 2) more axial space is required to accommodate parts in worst-case condition (tolerance stackup); and 3) more hydraulic fluid is needed to move the hydraulic clutch piston this additional distance.

For the above reasons, including the ability to optimize transmission shift quality, it has been the desire of the industry to control the total running clearance of a clutch-plate pack, particularly after the clutch assembly has been in service, and clutch plates have worn due to usage. It is therefore highly desirable to have a clutch piston retractor system that could automatically maintain an "ideal" running clearance regardless of how long the system has been in service. This would enable the designer to optimize the transmission shift quality without having to periodically recalibrate the control as is required in most of today's powershift transmissions.

Accordingly one object of the invention is to create a clutch system providing the above mentioned features.

According to the object of the invention a powershift transmission clutch system of the above mentioned manner is provided with a sleeve press-fitted onto the hydraulic clutch piston to adjust and position the piston to control a predetermined clutch running clearance amount (8), the clutch hub surface preventing axial movement of the sleeve if the clutch is de-energized and the retainer acting as a stop to limit travel distance of the sleeve if the clutch is energized; a spring operatively interposed between the retainer and the clutch hub surface urging the sleeve and piston towards the clutch hub surface if the clutch is de-energized. Furthermore a piston retractor system for said powershift transmission system comprises a clutch housing having a hydraulic clutch piston, a series of clutch separator and friction plates, a pressurized hydraulic fluid disposed within a piston cavity, a clutch drum, a clutch hub surface, a clutch plate pack, a retainer and a spring system; the hydraulic clutch piston disposed within the piston cavity and sliding axially within the piston cavity to engage a series of clutch separator and friction plates coaxially disposed within the piston cavity and decrease running clearance between the series of clutch separator and friction plates; the pressurized hydraulic fluid maintained within the piston cavity providing a force that pushes the clutch piston axially within the piston cavity; the clutch drum welded to the clutch housing and having a cylindrical body and splined teeth for engaging the series of clutch separator and friction plates; the clutch hub surface coaxially disposed within the clutch drum and having the cylindrical body and splined teeth for engaging the series of clutch separator and friction plates; the clutch plate pack operatively interposed between the clutch drum and the clutch hub surface and engaging the series of clutch separator and friction plates; the retainer held within the clutch housing; the piston retractor system being characterized in comprising a sleeve press-fitted onto the hydraulic clutch piston; the spring system, further comprised of at least one spring, operatively interposed between the retainer and the sleeve and having a compressed height and an installed height wherein the difference between the compressed height and installed height provides a predetermined clutch running clearance.

The present invention provides a simplified and improved clutch piston retractor system for controlling the running clearance of clutch plate(s) to minimize windage loss and to improve transmission shift quality. This improved shift quality is desirable to improve operator's comfort, reduce shock loads on power transmission components, and to reduce the energy input to the clutches when changing gears during the acceleration and deceleration of the vehicle. Usually, high loads on the clutches can result in the clutch disks slipping with respect to each other, even when the clutch is engaged. The clutch piston retractor system solves this problem by self adjusting itself to accommodate for the damage to the disks and optimizing the shift quality, while compensating for the additional travel distance. Thus, the need to periodically recalibrate the entire system is eliminated.

Several embodiments of the invention are described in greater detail in the following drawings.
- **Fig. 1**: is a side perspective view showing a powershift transmission clutch system in a de-energized mode;
- **Fig. 2**: is a side view of showing the powershift transmission clutch system of Fig. 1 in an energized mode;
- **Fig. 3**: is a side perspective view showing the powershift transmission clutch system of Fig. 1 in a de-energized mode with clutch piston in an adjusted position;
- **Fig. 4**: is a side perspective view showing an alternative embodiment of a clutch piston retractor system in a de-energized mode;
- **Fig. 5**: is a side perspective view showing an alternative embodiment of a clutch piston retractor system in an energized mode.

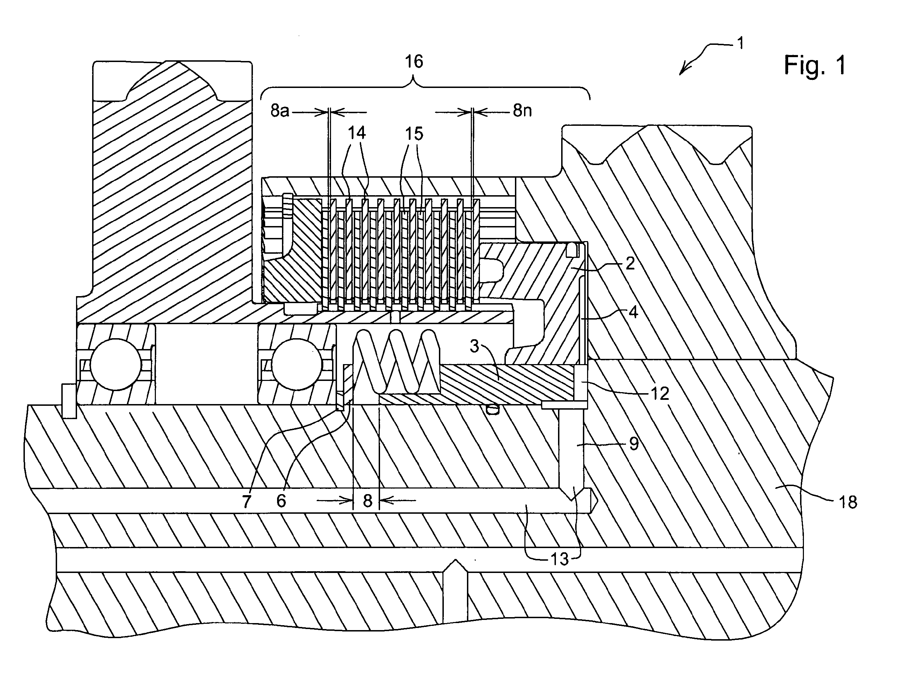

Reference is made first to Fig. 1, which shows an embodiment of the invention using a simple clutch piston retractor system comprised of a hydraulic clutch piston 2, and a sleeve 3 which is press-fitted onto the bore of the hydraulic clutch piston 2, to automatically adjust and position the sleeve 3 to control the clutch running clearance 8 to a pre-determined amount, regardless of how much wear clutch plates 14, 15 have accumulated.

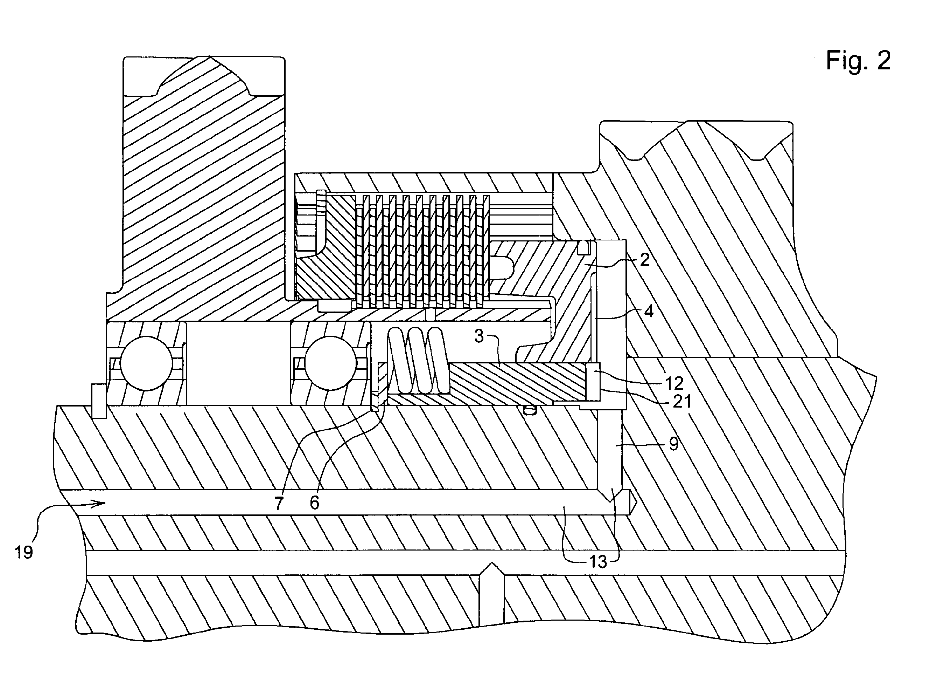

Within the clutch housing 16 is a sleeve 3 that is press fitted onto the bore of the hydraulic clutch piston 2 and both are configured to move together during normal operation, and slip relative to each other to make adjustment for maintaining optimized running clearance 8. Where total running clearance 8 is the sum of individual running clearance 8a through 8n between separator plates 14 and friction plates 15. When clutch 1 is energized, Fig. 2, the pressurized hydraulic fluid 13 or clutch lube pressure 13 from control valve 19 travels through a lube passage 9 on the clutch shaft 18 and thru slot 12 in sleeve 3 into the piston cavity 4 behind the hydraulic clutch piston 2. As the hydraulic clutch piston 2 is pushed axially within the piston cavity 4 by the hydraulic fluid an axial force is applied to clutch plates 14, 15 pressing clutch plates 14, 15 together and thus enabling clutch plates 14, 15 to become frictionally engaged with each other. The sleeve 3, on the other hand, which is press fitted to the hydraulic clutch piston 2, will move relative to hydraulic clutch piston 2 and is stopped by retainer 6 and snap ring 7. Since the hydraulic force of the pressurized hydraulic fluid 13 is higher than the friction between sleeve 3 and hydraulic clutch piston 2, the hydraulic clutch piston 2 will slip on sleeve 3 and continue to move to take up the remaining clearance between the clutch plates 14, 15 in order to fully engage clutch 1. The longer it takes the hydraulic clutch piston 2 to travel to fully engage clutch plates 14, 15, the more slippage will occur. This is evident because the hydraulic clutch piston 2 is attached to sleeve 3 and sleeve 3 will only travel a certain distance before it is stopped by retainer 6. If sleeve 3 reaches the retainer 6 before clutch plates 14, 15 are fully engaged, the hydraulic clutch piston 2 will have to continue its travel or travel beyond the point where sleeve 3 has stopped.

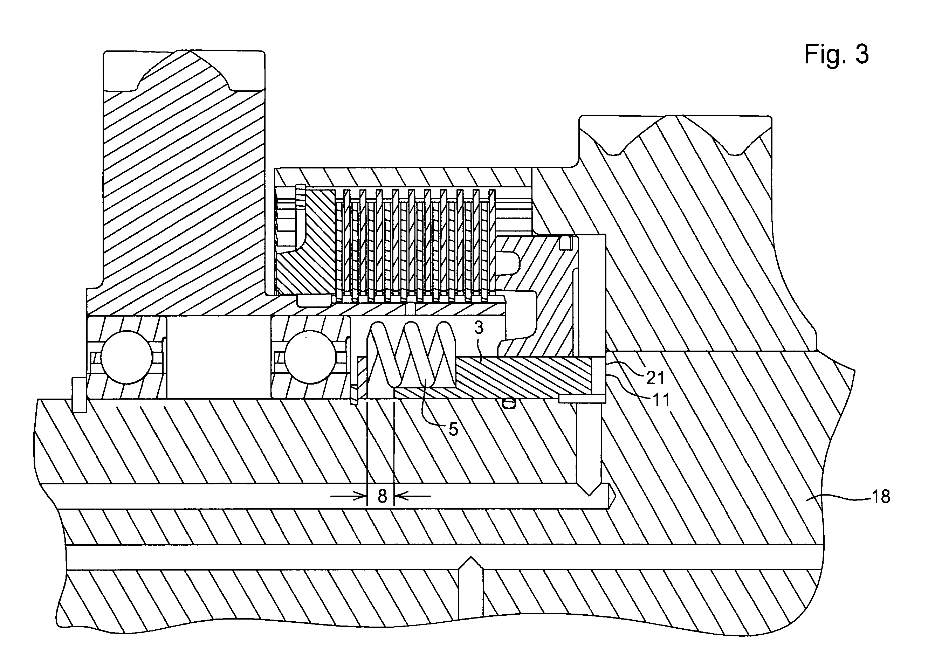

When clutch 1 is de-energized, Fig 3, spring 5 presses against sleeve 3 in an opposite axial direction until end 21 of sleeve 3 is pushed back against clutch hub surface 11 and the predetermined running clearance 8 or pre-determined travel distance is again reached. Since the hydraulic clutch piston 2 and sleeve 3 are press fitted together, and slippage has occurred between the two, the sleeve 3 will travel back to clutch hub surface 11 while piston 2 will retract back to its final slippage position and not back to the clutch hub surface 11 (i.e. original position). By providing a piston retraction system, the piston 2 will self-adjust no matter how much slippage will occur. Once this slippage occurs, and clutch plates 14, 15 decrease in width, the total clutch running clearance 8 will always be the same, and hence the travel distance of clutch piston 2 will always be the same. On the other hand, sleeve 3 will continue to axially adjust its position relative to hydraulic clutch piston 2 and within clutch cavity housing 4 to maintain the predetermined clearance between clutch plates. Without this self adjusted piston on sleeve feature to maintain the predetermined running clearance 8, the need to recalibrate the clutch system would be evident.

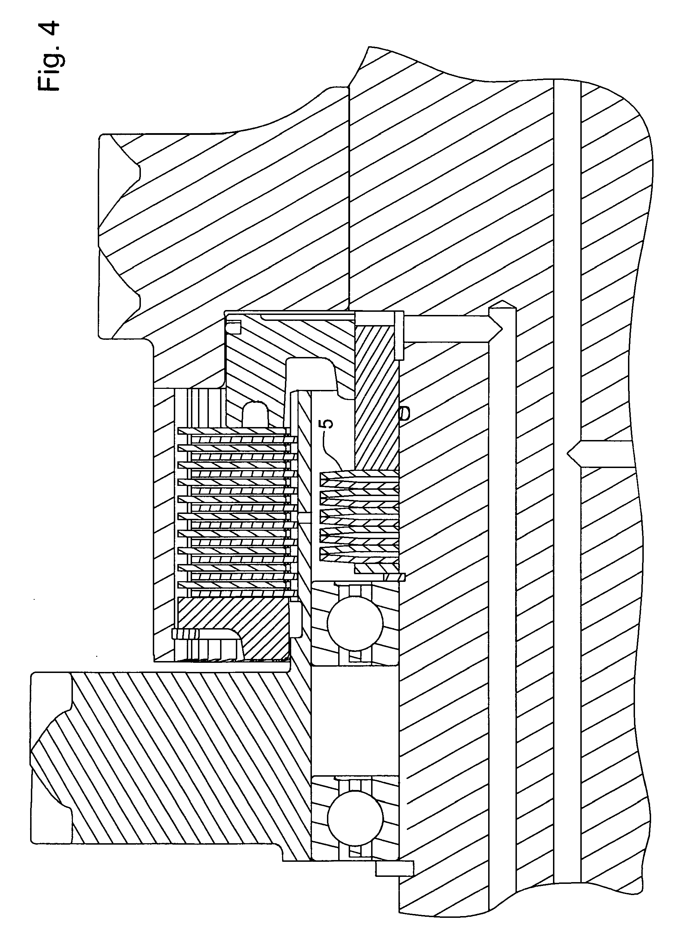

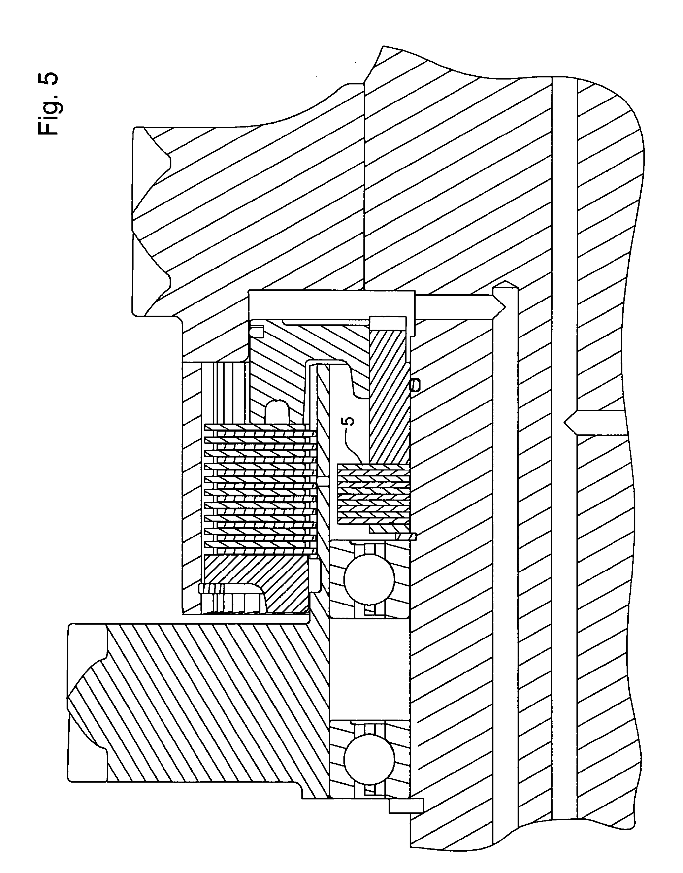

In an alternative embodiment, the difference between spring's installed height Fig. 4 and solid height Fig. 5 within the clutch housing will operate as the predetermined clutch running clearance. Specifically, when the spring 5 is compressed and formed into one solid piece, the difference between this compressed height and installed height is the predetermined running clearance 8. The piston retractor system will operate in the same manner as described above with the primary difference being the use of the compressed spring as a basis for which the total travel distance will be determined.

## Claims

1. A powershift transmission clutch system for a hydraulically operated clutch (1) having an energized and a de-energized position comprising: a clutch housing (16) having a piston cavity (4); a hydraulic clutch piston (2) disposed within the piston cavity (4) and sliding axially within the piston cavity (4) to engage a series of clutch separator and friction plates (14, 15) coaxially disposed within the piston cavity (4); a pressurized hydraulic fluid (13) providing a force within the piston cavity (4) that pushes the hydraulic clutch piston (2) axially; a clutch drum splined to the clutch housing (16) and having a cylindrical body and splined teeth for engaging the series of clutch separator and friction plates (14, 15); a clutch hub surface (11) coaxially disposed within the clutch drum and having the cylindrical body and splined teeth for engaging the series of separator and friction plates (14, 15); a clutch plate pack operatively interposed between the clutch drum and the clutch hub surface (11) and engaging the series of clutch separator and friction plates (14, 15); a retainer (6) held within the clutch housing (16); the powershift transmission clutch system is **characterized in** comprising a sleeve (3) press-fitted onto the hydraulic clutch piston (2) to adjust and position the piston (2) to control a predetermined clutch running clearance amount (8), the clutch hub surface (11) preventing axial movement of the sleeve (3) if the clutch is de-energized and the retainer (6) acting as a stop to limit travel distance of the sleeve (3) if the clutch (1) is energized; a spring (5) operatively interposed between the retainer and the clutch hub surface (11) urging the sleeve (3) and piston (2) towards the clutch hub surface (11) if the clutch (1) is de-energized.

2. The powershift transmission clutch system of claim 1 wherein when the series of clutch separator and friction plates (14, 15) become worn, the distance between the series of clutch separator and friction plates (14, 15) increases and the travel time required for full clutch separator and friction plates (14, 15) increases.

3. The powershift transmission clutch system of claim 1 wherein when the series of clutch separator and friction plates (14, 15) decrease in size from their original thickness to a thickness after wear, the predetermined running clearance (8) is constant.

4. The powershift transmission clutch system of claim 1 wherein a self-adjusting slippage occurs between the sleeve (3) and the hydraulic clutch piston (2).

5. The powershift transmission clutch system of claim 4 wherein the self adjusting slippage between the sleeve (3) and clutch piston (2)enables the clutch system to maintain a pre-determined hydraulic clutch piston travel distance.

6. The powershift transmission clutch system of claim 1 wherein the predetermined clutch running clearance (8) maintains the hydraulic clutch piston travel distance at a constant when the hydraulic clutch piston (2) travels axially within the piston cavity (4) to engage the series of clutch separator and friction plates (14, 15).

7. The powershift transmission clutch system of claim 1 wherein a gap exists between the series of clutch separator and friction plates (14, 15) when they operate in the de-energized position.

8. The powershift transmission clutch system of claim 1 wherein if the clutch is in a de-energized position the spring (5) pushes the sleeve (3) and the hydraulic clutch piston (2) axially towards the hub surface (11) until the sleeve is stopped by the hub surface (11).

9. The powershift transmission clutch system of claim 1 wherein the force of the pressurized hydraulic fluid (13) causes the hydraulic clutch piston (2) to slip on the sleeve (3) and move axially within the piston cavity (4) to take up clearance between the series of clutch separator and friction plates (14, 15).

10. The powershift transmission clutch system of claim 1 wherein the force on the hydraulic clutch piston (2) from the pressurized hydraulic fluid (13) is higher than the friction between the sleeve (3) and clutch piston (2).

11. The powershift transmission clutch system of claim 1 wherein the retainer (6) functions as a stop and slippage between the piston (2) and sleeve (3) occurs after the sleeve (3) engages the stop and during the pistons' (2) travel toward the series of clutch separator and friction plates (14, 15).

12. The powershift transmission clutch system of claim 1 wherein the sleeve (3) returns back to the hub surface (11) after the hydraulically operated clutch (1) is in a de-energized position.

## Patentansprüche

1. Kupplungssystem für ein Lastschaltgetriebe für eine hydraulisch betriebene Kupplung (1) mit einer erregten und einer entregten Stellung, umfassend: ein Kupplungsgehäuse (16) mit einem Kolbenhohlraum (4); einen hydraulischen Kupplungskolben (2), der in dem Kolbenhohlraum (4) angeordnet ist und in Axialrichtung in dem Kolbenhohlraum (4) gleitet, um eine Reihe von Kupplungstrenn- und -reibscheiben (14, 15), die koaxial in dem Kolbenhohlraum (4) angeordnet sind, in Eingriff zu nehmen; ein druckbeaufschlagtes Hydraulikfluid (13), das eine Kraft in dem Kolbenhohlraum (4) bereitstellt, die den hydraulischen Kupplungskolben (2) in Axialrichtung drückt; eine durch Keilverzahnung mit dem Kupplungsgehäuse (16) verbundene Kupplungstrommel, die einen zylindrischen Körper und Keilzähne zur Ineingriffnahme der Reihe von Kupplungstrenn- und - reibscheiben (14, 15) aufweist; eine Kupplungsnabenfläche (11), die koaxial in der Kupplungstrommel angeordnet ist und einen zylindrischen Körper und Keilzähne zur Ineingriffnahme der Reihe von Trenn- und Reibscheiben (14, 15) aufweist; ein Kupplungsscheibenpaket, das zwischen der Kupplungstrommel und der Kupplungsnabenfläche (11) wirkangeordnet ist und die Reihe von Kupplungstrenn- und -reibscheiben (14, 15) in Eingriff nimmt; einen Halter (6), der in dem Kupplungsgehäuse (16) gehalten wird; wobei das Kupplungssystem für das Lastschaltgetriebe **dadurch gekennzeichnet ist, dass** es eine Hülse (3) umfasst, die durch Presspassung auf den hydraulischen Kupplungskolben (2) aufgebracht wird, um den Kolben (2) einzustellen und zu positionieren und so ein Vorbestimmtes Kupplungslaufspielausmaß (8) zu steuern, wobei die Kupplungsnabenfläche (11) eine Axialbewegung der Hülse (3) verhindert, wenn die Kupplung entregt ist, und der Halter (6) als ein Anschlag zur Begrenzung von Hubweg der Hülse (3) wirkt, wenn die Kupplung (1) erregt ist; und durch eine Feder (5) gekennzeichnet ist, die zwischen dem Halter und der Kupplungsnabenfläche (11) wirkangeordnet ist und die Hülse (3) und den Kolben (2) zu der Kupplungsnabenfläche (11) drückt, wenn die Kupplung (1) entregt ist.

2. Kupplungssystem für ein Lastschaltgetriebe nach Anspruch 1, wobei, wenn die Reihe von Kupplungstrenn- und - reibscheiben (14, 15) verschlissen wird, der Abstand zwischen der Reihe von Kupplungstrenn- und -reibscheiben (14, 15) zunimmt und die Laufzeit, die für den vollständigen Eingriff der Kupplungstrenn- und -reibscheiben (14, 15) erforderlich ist, zunimmt.

3. Kupplungssystem für ein Lastschaltgetriebe nach Anspruch 1, wobei, wenn die Größe der Reihe von Kupplungstrenn-und -reibscheiben (14, 15) von ihrer ursprünglichen Dicke zu einer Dicke nach Verschleiß abnimmt, das Vorbestimmte Laufspiel (8) konstant ist.

4. Kupplungssystem für ein Lastschaltgetriebe nach Anspruch 1, wobei zwischen der Hülse (3) und dem hydraulischen Kupplungskolben (2) ein selbstnachstellender Schlupf auftritt.

5. Kupplungssystem für ein Lastschaltgetriebe nach Anspruch 4, wobei der selbstnachstellende Schlupf zwischen der Hülse (3) und dem Kupplungskolben (2) ermöglicht, dass das Kupplungssystem einen Vorbestimmten Hubweg des hydraulischen Kupplungskolbens aufrechterhält.

6. Kupplungssystem für ein Lastschaltgetriebe nach Anspruch 1, wobei das Vorbestimmte Kupplungslaufspiel (8) den Hubweg des hydraulischen Kupplungskolbens konstant hält, wenn sich der hydraulische Kupplungskolben (2) in Axialrichtung in dem Kolbenhohlraum (4) bewegt, um die Reihe von Kupplungstrenn- und -reibscheiben (14, 15) in Eingriff zu nehmen.

7. Kupplungssystem für ein Lastschaltgetriebe nach Anspruch 1, wobei zwischen der Reihe von Kupplungstrenn- und - reibscheiben (14, 15) ein Spalt besteht, wenn sie in der entregten Stellung betrieben werden.

8. Kupplungssystem für ein Lastschaltgetriebe nach Anspruch 1, wobei, wenn sich die Kupplung in einer entregten Stellung befindet, die Feder (5) die Hülse (3) und den hydraulischen Kupplungskolben (2) axial zur Nabenfläche (11) drückt, bis die Hülse durch die Nabenfläche (11) angehalten wird.

9. Kupplungssystem für ein Lastschaltgetriebe nach Anspruch 1, wobei die Kraft des druckbeaufschlagten Hydraulikfluids (13) bewirkt, dass der hydraulische Kupplungskolben (2) an der Hülse (3) rutscht und sich in Axialrichtung in dem Kolbenhohlraum (4) bewegt, um Spiel zwischen der Reihe von Kupplungstrenn- und -reibscheiben (14, 15) zu beseitigen.

10. Kupplungssystem für ein Lastschaltgetriebe nach Anspruch 1, wobei die Kraft an dem hydraulischen Kupplungskolben (2) von dem druckbeaufschlagten hydraulischen Fluid (13) größer ist als die Reibung zwischen der Hülse (3) und dem Kupplungskolben (2).

11. Kupplungssystem für ein Lastschaltgetriebe nach Anspruch 1, wobei der Halter (6) als ein Anschlag fungiert und Schlupf zwischen dem Kolben (2) und der Hülse (3) nach Ineingriffnahme des Anschlags durch die Hülse (3) und während des Hubs der Kolben (2) zu der Reihe von Kupplungstrenn- und -reibscheiben (14, 15) auftritt.

12. Kupplungssystem für ein Lastschaltgetriebe nach Anspruch 1, wobei die Hülse (3) zur Nabenfläche (11) zurückkehrt, nachdem sich die hydraulisch betriebene Kupplung (1) in einer entregten Stellung befindet.

## Revendications

1. Système d'embrayage de boîte de vitesses commandée en charge pour un embrayage à commande hydraulique (1) possédant une position sollicitée et une position non sollicitée, comprenant : un carter (16) d'embrayage comportant une cavité (4) à piston ; un piston hydraulique (2) d'embrayage placé à l'intérieur de la cavité (4) à piston et coulissant axialement à l'intérieur de la cavité (4) à piston pour entrer en prise avec une série de disques de séparation et de friction (14, 15) d'embrayage placés coaxialement à l'intérieur de la cavité (4) à piston ; un fluide hydraulique sous pression (13) produisant une force à l'intérieur de la cavité (4) à piston qui pousse le piston hydraulique (2) d'embrayage axialement ; un tambour d'embrayage accouplé par cannelures au carter (16) d'embrayage et possédant un corps cylindrique et des dents cannelées destinées à entrer en prise avec la série de disques de séparation et de friction (14, 15) d'embrayage ; une surface (11) de moyeu d'embrayage placée coaxialement à l'intérieur du tambour d'embrayage et possédant un corps cylindrique et des dents cannelées destinées à entrer en prise avec la série de disques de séparation et de friction (14, 15) ; un jeu de disques d'embrayage interposé de façon fonctionnelle entre le tambour d'embrayage et la surface (11) de moyeu d'embrayage et venant en prise avec la série de disques de séparation et de friction (14, 15) d'embrayage ; un élément de retenue (6) maintenu à l'intérieur du carter (16) d'embrayage ;
le système d'embrayage de boîte de vitesses commandée en charge étant **caractérisé en ce qu'**il comprend :
un manchon (3) emmanché à force sur le piston hydraulique (2) d'embrayage de manière à ajuster et positionner le piston (2) et régler ainsi une quantité de garde fonctionnelle prédéfinie (8) d'embrayage, la surface (11) de moyeu d'embrayage empêchant le mouvement axial du manchon (3) si l'embrayage n'est pas sollicité et l'élément de retenue (6) jouant le rôle de butée pour limiter la course du manchon (3) si l'embrayage (1) est sollicité ; et
un ressort (5), interposé de façon fonctionnelle entre l'élément de retenue et la surface (11) de moyeu d'embrayage, comprimant le manchon (3) et le piston (2) vers la surface (11) de moyeu d'embrayage si l'embrayage (1) n'est pas sollicité.

2. Système d'embrayage de boîte de vitesses commandée en charge selon la revendication 1, en cas d'usure de la série de disques de séparation et de friction (14, 15) d'embrayage, la distance entre la série de disques de séparation et de friction (14, 15) d'embrayage augmentant et le temps de déplacement nécessaire à l'entrée en prise complète des disques de séparation et de friction (14, 15) d'embrayage augmentant.

3. Système d'embrayage de boîte de vitesses commandée en charge selon la revendication 1, en cas de réduction de l'épaisseur de la série de disques de séparation et de friction (14, 15) d'embrayage d'une épaisseur initiale à une épaisseur après usure, la garde fonctionnelle prédéfinie (8) restant constante.

4. Système d'embrayage de boîte de vitesses commandée en charge selon la revendication 1, un glissement de compensation automatique se produisant entre le manchon (3) et le piston hydraulique (2) d'embrayage.

5. Système d'embrayage de boîte de vitesses commandée en charge selon la revendication 4, le glissement de compensation automatique entre le manchon (3) et le piston (2) d'embrayage permettant au système d'embrayage de maintenir une course prédéfinie du piston hydraulique d'embrayage.

6. Système d'embrayage de boîte de vitesses commandée en charge selon la revendication 1, la garde fonctionnelle prédéfinie (8) d'embrayage maintenant la course du piston hydraulique d'embrayage constante lorsque le piston hydraulique (2) d'embrayage se déplace axialement à l'intérieur de la cavité (4) à piston pour entrer en prise avec la série de disques de séparation et de friction (14, 15) d'embrayage.

7. Système d'embrayage de boîte de vitesses commandée en charge selon la revendication 1, un jeu existant entre la série de disques de séparation et de friction (14, 15) d'embrayage lorsqu'ils fonctionnent dans la position non sollicitée.

8. Système d'embrayage de boîte de vitesses commandée en charge selon la revendication 1, si l'embrayage occupe une position non sollicitée, le ressort (5) comprimant alors le manchon (3) et le piston hydraulique (2) d'embrayage axialement vers la surface (11) de moyeu jusqu'à ce que le manchon vienne buter sur la surface (11) de moyeu.

9. Système d'embrayage de boîte de vitesses commandée en charge selon la revendication 1, la force du fluide hydraulique sous pression (13) provoquant le glissement du piston hydraulique (2) d'embrayage sur la manchon (3) et son déplacement axial à l'intérieur de la cavité (4) à piston de manière à rattraper le jeu entre la série de disques de séparation et de friction (14, 15) d'embrayage.

10. Système d'embrayage de boîte de vitesses commandée en charge selon la revendication 1, la force exercée par le fluide hydraulique sous pression (13) sur le piston hydraulique (2) d'embrayage étant plus importante que la friction entre le manchon (3) et le piston (2) d'embrayage.

11. Système d'embrayage de boîte de vitesses commandée en charge selon la revendication 1, l'élément de retenue (6) jouant le rôle de butée, et le glissement entre le piston (2) et le manchon (3) se produisant après l'entrée en prise du manchon (3) avec la butée et durant la course du piston (2) vers la série de disques de séparation et de friction (14, 15) d'embrayage.

12. Système d'embrayage de boîte de vitesses commandée en charge selon la revendication 1, le manchon (3) regagnant la surface (11) de moyeu une fois que l'embrayage à commande hydraulique (1) occupe une position non sollicitée.
